# EUROPEAN PATENT APPLICATION

(11) **EP 1 405 559 A1**
(43) Date of publication of application: **07.04.2004**
(21) Application number: 02726454.8
(22) Date of filing: 22.05.2002
(51) Int. Cl.: A01K 1/015

(54) **MATERIALS FOR FEEDING ANIMALS**

(30) Priority: 10.07.2001 JP 2001209284
(71) Applicant: Ajinomoto Co., Inc., Tokyo 104-8315 (JP)
(72) Inventor: KURAUCHI, Masahiko, c/o Ajinomoto Co., Inc., Tokyo 104-8315 (JP); FURUTA, Kiyonori, c/o Ajinomoto Co., Inc., Kawasaki-shi, Kanagawa 210-8681 (JP); SATO, Hiroyuki, c/o Ajinomoto Co., Inc., Kawasaki-shi, Kanagawa 210-8681 (JP)
(74) Representative: Nicholls, Kathryn Margaret
(86) International application number: PCT/JP2002/004934
(87) International publication number: WO 2003/007702

(57) **Abstract**

In this application are disclosed an animal breeding material or article which is composed of a basic amino acid cellulose partial ester or a salt thereof as the effective constituting component, as well as such animal breeding material or article, wherein said basic amino acid cellulose partial ester or a salt thereof is in the form selected from the group consisting of fabric, non-woven fabric, fiber and powder, and such animal breeding material or article, which is to be used as an excrement disposing agent for animals, an underlay for animals, an antibacterial deodorant sheet for animals, an antibacterial deodorant pad for animals, or the like. Such animal breeding material or article is excellent in antibacterial properties, deodorization characteristics and safety.

## Description

### (Technical Field)

The present invention relates to an animal breeding material or article excellent in antibacterial properties, deodorization characteristics and safety. More particularly, the present invention relates to an animal breeding material or article composed of a basic amino acid cellulose partial ester (i.e., partial ester of cellulose with a basic amino acid) or a salt thereof as the effective constituting component. Here, the inventive animal breeding material or article refers to a material or article that is used by placing or laying in a cage or the like or applying onto an animal body during the breeding of an animal for the purpose of facilitating the disposal of excrements (feces and urine), preventing offensive smells, or the like.

### (Background Art)

Hitherto, sand, chaff, sawdust, paper and the like have been used as underlay for the purpose of facilitating the disposal of excrements, remnants of feed or the like, during breeding of pets such as dogs, cats and birds and other animals. However, use of these materials is not always preferred from the practical viewpoint because of the proliferation of bacteria and the occurrence of offensive smells.

As an attempt to solve these problems, there is disclosed in Japanese Patent Application Laid-Open (Kokai) No. 6-14669 zeolite particles coated with bentonite as excrement disposal sand for pets, but they are incombustible, and as the results, there are caused problems with the disposal upon their dumping because of the incombustibility. Furthermore, in Japanese Patent Application Laid-Open (Kokai) No. 8-70724 is disclosed a sheet for pets wherein a roasted coffee beans extraction residue is used, but a repugnant behavior may be caused depending on the kinds of animals due to the offensive smells peculiar to the roasted coffee beans extraction residue. In addition, Japanese Patent Application Laid-Open (Kokai) No. 2000-316693 and Japanese Patent Laid-Open No. 2001-57931 disclose antibacterial deodorant sheets wherein a non-woven fabric containing the metal salt of an organic compound as an antibacterial and mildew-resistant component is used, but such antibacterial deodorant sheets are characterized in that the antibacterial and mildew-resistant performance is exhibited by the antibacterial component being dissolved or eluted in the water contained in excrements or the like of an animal during use, and as a result, it cannot be said that living bodies and the environment are not adversely affected when the component is dissolved or eluted.

### (Disclosure of the Invention)

It is an object of the present invention to provide an animal breeding material or article which is free from any problems mentioned above and is excellent in antibacterial properties, deodorization characteristics and safety.

The present inventors have found that the above object can be achieved by constituting or composing all or part of the animal breeding material or article, of a basic amino acid cellulose partial ester or a salt thereof which itself has the antibacterial activity, and have accomplished the present invention based on these findings.

Accordingly, the present invention relates to an animal breeding material or article which is excellent in antibacterial properties, deodorization characteristics and safety, and composed of a basic amino acid cellulose partial ester or a salt thereof as the effective constituting component.

Incidentally, the basic amino acid cellulose partial ester or a salt thereof has a chemical structure where the carboxyl group of a basic amino acid and the hydroxyl group(s) of cellulose are subjected to dehydration to form a covalent bond (ester bond), and hence the possibility of elution by the liquid secreted, exude, or excreted from a living body is low. Moreover, even when the ester bond is cleaved, the component which is removed from the cellulose is an amino acid which is harmless to a living body, so that the inventive animal breeding material or article is extremely high in safety.

In the following will be described the present invention in greater detail.

The basic amino acid cellulose partial ester or a salt thereof according to the present invention has a lysine, arginine, ornithine, or histidine residue as the basic amino acid moiety, and thus the said basic amino acid cellulose partial ester is a lysine cellulose partial ester, an arginine cellulose partial ester, an ornithine cellulose partial ester or a histidine cellulose partial ester. Here, the basic amino acid may be, of course, a mixed amino acid.

The degree of substitution for esterification of the basic amino acid cellulose partial ester or a salt thereof is 0.00001 to less than 3. Here, the degree of substitution for esterification is defined as the number of the amino acids forming the ester bond per one of the glucose residues constituting cellulose, the amino acids being bound through ester bond to cellulose. When the degree of substitution for esterification does not reach the above range, only an insufficient antibacterial activity is exhibited.
Additionally, there may be mentioned as the kinds of the salts, for example, organic acid salts such as an acetate, a lactate, a malate, a tartrate, a succinate, a citrate, a benzoate, a pyrrolidonecarboxylate, and the like, inorganic acid salts such as a hydrochloride, a sulfate, a phosphate, and the like, and Lewis acid salts such as zinc chloride, and the like.

The basic amino acid cellulose partial ester can be produced, for example, by the following method. Namely, cellulose is first brought into contact with a treating agent solution containing a basic amino acid ester, and then, after the liquid component is suitably removed according to need, the resulting product is dried. Thereafter, the alcohol moiety of the basic amino acid ester is exchanged with cellulose (ester exchange reaction, i.e., transesterification) by a heating treatment, and then post-treatment such as washing or the like is carried out in order to remove the unreacted basic amino acid ester. Further, in a step after the heating treatment, the basic amino acid cellulose partial ester can be converted into the salt with the acid, by using any acid.

In greater detail, as the treating agent solution is used a solution obtainable by dissolving a basic amino acid ester, preferably a lower alkyl ester having 1 to 6 carbon atoms including a methyl ester as a representative, in water, an alcohol or a mixture thereof. In the case where the basic amino acid ester is in the form of a salt with hydrochloric acid, sulfuric acid, or the like, the salt may be neutralized, if necessary, with an alkali metal or alkaline-earth metal hydroxide, an alkali metal or alkaline-earth metal carbonate, an alkali metal or alkaline-earth metal hydrogencarbonate, an organic amine, or the like, in an amount of 10 to 200 mol% based on the basic amino acid ester. The content ratio of the basic amino acid ester in the treating agent solution is any ratio insofar as the ratio is within the range where the ester can be dissolved or dispersed in the above water, alcohol, or a mixture thereof. Cellulose is immersed in the treating agent solution, and after the liquid component is suitably removed according to need, the resulting product is dried and then thermally processed at 100 to 200°C, preferably 120 to 180°C for 10 seconds to 100 minutes, preferably 1 to 60 minutes, whereby the transesterification takes place. Thereafter, the unreated basic amino acid ester is removed by washing, followed by obtaining a final product of the basic amino acid cellulose partial ester, via a drying step. The washing after the thermal processing can be carried out in the order of firstly washing with water, then washing with an aqueous solution of an organic acid such as citric acid or the like, and finally washing with water, but some of them may be optionally omitted. When the washing is carried out with an aqueous solution of an organic acid, the final product is in the form of an organic acid salt of a basic amino acid cellulose partial ester, because the basic amino acid ester bound to cellulose through an ester bond forms a salt therewith.

The present invention is relates to an animal breeding material or article which is composed of such a basic amino acid cellulose partial ester or a salt thereof as the constituting component effective for the purpose of antibacterial properties, deodorization characteristics and safety. Specifically, such an animal breeding material or article may be any one insofar as the basic amino acid cellulose partial ester or a salt thereof in the form of fabric, non-woven fabric, fiber, powder or the like, is arranged or incorporated as at least part of the animal breeding material or article, and a hitherto known structure may be adopted as the other part thereof. For example, in the case of the animal breeding material or article, such as an antibacterial deodorant pad for an animal, for the purpose of absorbing the liquid secreted, exuded, or excreted from a living body, the inventive basic amino acid cellulose partial ester or a salt thereof, e.g., in the fibrous or powdery form, may replace all or part of the absorptive body or material in a hitherto known structure.

### (Best Mode for Carrying Out the Invention)

In the following will be described the present invention in detail with reference to Examples, but the invention is not limited thereto.

### Production Example 1: <Production of L-lysine cellulose partial ester citrate (non-woven fabric)>

In 15 ml of methanol was dissolved 2.33 g (10 mmol) of L-lysine methyl ester dihydrochloride, and then 5 ml of 2N aqueous sodium hydroxide solution was added thereto, whereby a treating agent solution was prepared. In the treating agent solution was immersed 5.0 g of a cotton non-woven fabric ("CX32" manufactured by Haniron K.K.), and the fabric was air-dried for 1 hour and then heat-treated at 140°C for 20 minutes. The resulting fabric was washed with water, subjected to the operation of washing with 5% aqueous sodium bicarbonate and rinsing with water repeatedly three times, subjected to the operation of washing with 10% aqueous citric acid solution and rinsing with water repeatedly three times, and then, after removal of the water, air-dried to prepare a sample.

After part of the sample was taken and dried overnight at 50°C under vacuum, about 0.5 g portion thereof was accurately weighed and subjected to alkaline hydrolysis by keeping with stirring in 50 ml of 0.5N sodium hydroxide at room temperature for 18 hours. After the fibers were filtered off, the L-lysine in the filtrate was quantitatively determined using an amino acid analyzer (Hitachi Ltd., "L-8500"). Based on the results, the bound amount of L-lysine per 1 g of the sample was calculated and found to be 0.105 mmol. Moreover, based on the results of the quantitative determination by HPLC, of the citric acid in the same filtrate, the bound amount of the citric acid per 1 g of the sample was calculated and found to be 0.190 mmol.

### Production Example 2: <Production of L-arginine cellulose partial ester citrate (non-woven fabric)>

Production Example 1 was repeated except that 2.61 g (10 mmol) of L-arginine methyl ester dihydrochloride was used instead of the L-lysine methyl ester dihydrochloride. In a similar manner to the method in Production Example 1, the bound amounts of the L-arginine and the citric acid per 1 g of the sample were calculated and found to be 0.109 mmol and 0.162 mmol, respectively.

### Production Example 3: <Production of L-lysine cellulose partial ester citrate (powder)>

A treating agent solution was prepared by mixing 2.32 g (10 mmol) of L-lysine methyl ester dihydrochloride, 5 ml of 2N aqueous sodium hydroxide solution, and 40 ml of methanol. After 10.0 g of a microcrystalline cellulose "Avicel FD-101" (manufactured by Asahi Kasei Corporation) was added to the treating agent solution, the mixture was concentrated at 40°C under reduced pressure using a rotary evaporator (heated on an oil bath) until the solvent was completely removed by evaporation. The oil bath was elevated in temperature to 140°C and was kept at the same temperature for 10 minutes. After the thermally treated mass was cooled to room temperature, 40 ml of water was added thereto to disperse the mass, and then the dispersed mass was suction-filtered and washed. This operation was carried out once more, and then the resulting product was similarly washed with 40 ml of 10% aqueous citric acid solution. After washed again with 40 ml of water, the washed product was dried under reduced pressure, whereby 9.92 g of a powder was obtained. The bound amount of the L-lysine per 1 g of the sample was calculated by the method described in Production Example 1 and was found to be 0.084 mmol. Moreover, a peak was confirmed for the ester bond at 1720 to 1740 cm⁻¹ on the IR spectroscopic analysis.

### Production Example 4: <Production of L-arginine cellulose partial ester citrate (powder)>

Production Example 3 was repeated except that 2.61 g (10 mmol) of L-arginine methyl ester dihydrochloride was used instead of the L-lysine methyl ester dihydrochloride. In a similar manner to the method described in Production Example 1, the bound amount of the L-arginine per 1 g of the sample was calculated and found to be 0.054 mmol. Moreover, a peak was confirmed for the ester bond at 1720 to 1740 cm⁻¹ on the IR spectroscopic analysis.

### Example 1

Each non-woven fabric of Production Examples 1 and 2 could, as it was, be used as an antibacterial deodorant sheet for an animal. Moreover, antibacterial deodorant pads could be prepared by wrapping a highly water-absorbing polymer or the like with such a sheet. Furthermore, it was possible to prepare excrement-treating materials for an animal or underlay for an animal from each powder of Production Examples 3 and 4 as it was or by suitably mixing it with wood-pulp or the like, followed by molding according to need.

### Test Example 1: <Antibacterial activity test>

An antibacterial activity test was carried out on the non-woven fabric or powder of Production Example 1, 2, 3, or 4 in accordance with the procedure described in "JIS L 1902:1998 under "Test Procedures for Antibacterial Activity of Fiber Products", at 8. Quantitative determination test". As test bacteria were used Staphylococcus aureus ATCC 6538P and Klebsiella pneumoniae ATCC 4352. After each specimen was sterilized with a high-pressure vapor, a given amount (about 2.5 × 10⁴) of each bacterium suspended in a Nutrient Broth medium was inoculated and cultured at 37°C for 18 hours. Then, the living cells were counted for each bacterium.

Proliferation values, bacteriostatic values, and bactericidal activity values were calculated from the formulae described in JIS L 1902:1998, i.e., F = M_{b} - Mₐ, S = M_{b} - M_{c}, and L = Mₐ - M_{c}, provided that F: proliferation value, S: bacteriostatic value, L: bactericidal activity value, Mₐ: common logarithm value of the number of the living cells on unprocessed specimens immediately after inoculation, the said number being the average for three spevimens, M_{b}: common logarithm value of the number of the living cells on unprocessed specimens after 18 hours of culture, the said number being the average for three specimens, and M_{c}: common logarithm value of the number of the living cells on processed specimens after 18 hours of culture, the said number being the average for three specimens. The results are shown in the following Tables 1 to 4.

**Table 1:**

| Results of antibacterial activity test on the non-woven fabric of Production Example 1 | | |
|---|---|---|
| Test bacterium (Storage No.) | Staphylococcus aureus (ATCC 6538P) | Klebsiella pneumoniae (ATCC 4352) |
| Inoculant bacterium concentration (cells/ml) | 2.5 × 10⁴ | 2.5 × 10⁴ |
| Number of the living cells after 18 hours (cells/ml) | <20 | <20 |
| Proliferation value(F) | 2.8 | 3.3 |
| Bacteriostatic value(S) | >5.9 | >6.4 |
| Bactericidal activity value(L) | >3.1 | >3.1 |

**Table 2:**

| Results of antibacterial activity test on the non-woven fabric of Production Example 2 | | |
|---|---|---|
| Test bacterium (Storage No.) | Staphylococcus aureus (ATCC 6538P) | Klebsiella pneumoniae (ATCC 4352) |
| Inoculant bacterium concentration (cells/ml) | 2.5 × 10⁴ | 2.5 × 10⁴ |
| Number of the living cells after 18 hours (cells/ml) | 1.9 × 10² | <20 |
| Proliferation value(F) | 2.8 | 3.3 |
| Bacteriostatic value(S) | 4.9 | >6.4 |
| Bactericidal activity value(L) | 2.1 | >3.1 |

**Table 3:**

| Results of antibacterial activity test on the powder of Production Example 3 | | |
|---|---|---|
| Test bacterium (Storage No.) | Staphylococcus aureus (ATCC 6538P) | Klebsiella pneumoniae (ATCC 4352) |
| Inoculant bacterium concentration (cells/ml) | 2.5 × 10⁴ | 2.5 × 10⁴ |
| Number of the living cells after 18 hours (cells/ml) | <20 | <20 |
| Proliferation value(F) | 3.0 | 3.1 |
| Bacteriostatic value(S) | >5.9 | >6.2 |
| Bactericidal activity value(L) | >2.9 | >3.1 |

**Table 4:**

| Results of antibacterial activity test on the powder of Production Example 4 | | |
|---|---|---|
| Test bacterium (Storage No.) | Staphylococcus aureus (ATCC 6538P) | Klebsiella pneumoniae (ATCC 4352) |
| Inoculant bacterium concentration (cells/ml) | 2.5 × 10⁴ | 2.5 × 10⁴ |
| Number of the living cells after 18 hours (cells/ml) | <20 | <20 |
| Proliferation value(F) | 3.0 | 3.1 |
| Bacteriostatic value(S) | >5.9 | >6.2 |
| Bactericidal activity value(L) | >2.9 | >3.1 |

From these tests, it was confirmed that the non-woven fabric or powder of Production Example 1, 2, 3, or 4 exhibits a sufficient antibacterial activity.

### Test Example 2: <deodorization test>

A deodorization test was carried out on the non-woven fabric of Production Example 1. Ammonia and acetic acid were used as the target gas for measurement, and the initial concentrations thereof were 40 ppm and 100 ppm, respectively. After 1.0 g of the specimen was placed in a 5 L tedler bag, 3 L of each target gas for measurement was injected. The gas concentrations after 2 hours and 24 hours were measured by means of a detecting tube. As the detecting tube, No. 3L (manufactured by K.K. Gastec) was used for the ammonia and No. 81 (manufactured by K.K. Gastec) for the acetic acid. The results are shown in the following Tables 5 and 6. In the tables, the processed product, the unprocessed product (control) , and the blank (blank test) mean the non-woven fabric of Production Example 1, the non-woven fabric before processing, and the test carried out with nothing being placed in the bag, respectively.

**Table 5:**

| Results of deodorization test for ammonia on the non-woven fabric of Production Example 1 | | | |
|---|---|---|---|
| Sample | Concentration of ammonia (ppm) | | |
| | Initial concentration | After 2 hours | After 24 hours |
| Processed product | 40 | <0.5 | <0.5 |
| Unprocessed product (control) | 40 | 19 | 11 |
| Blank (blank test) | 40 | 33 | 20 |

**Table 6:**

| Results of deodorization test for acetic acid on the non-woven fabric of Production Example 1 | | | |
|---|---|---|---|
| Sample | Concentration of acetic acid(ppm) | | |
| | Initial concentration | After 2 hours | After 24 hours |
| Processed product | 100 | 7.9 | 4.8 |
| Unprocessed product (control) | 100 | 9.1 | 7.1 |
| Blank (blank test) | 100 | 72 | 42 |

Form there tests, it was confirmed that the non-woven fabric of Production Example 1 exhibits sufficient deodorization characteristics.

### Test Example 3: <Elution test>

An elution test was carried out by shaking a 0.422 g piece of the non-woven fabric produced in Production Example 1 in 10 ml of water at room temperature. As the result of analysis of the eluted components by HPLC, elution of the L-lysine was observed in an amount of 0.0098 mmol after 1 hour and 0.0130 mmol after 5 hours per 1 g of the piece. However, no eluted substance other than L-lysine was observed.

### (Industrial Applicability)

According to the present invention can be easily provided an animal breeding material or article which is excellent in antibacterial properties, deodorization characteristics and safety, and composed of a basic amino acid cellulose partial ester or a salt thereof as the effective constituting component.

## Claims

1. An animal breeding material or article which is composed of a basic amino acid cellulose partial ester or a salt thereof as the effective constituting component.

2. The animal breeding material or article of Claim 1, wherein said basic amino acid cellulose partial ester or a salt thereof is in the form selected from the group consisting of fabric, non-woven fabric, fiber and powder.

3. The animal breeding material or article of Claim 1 or 2, which is to be used as an antibacterial deodorizing agent for animals selected from the group consisting of an excrement disposing agent for animals, an underlay for animals, an antibacterial deodorant sheet and an antibacterial deodorant pad.
